# EUROPÄISCHE PATENTSCHRIFT

(11) **EP 1 959 105 B1**
(45) Veröffentlichungstag und Bekanntmachung des Hinweises auf die Patenterteilung: **30.06.2010**
(21) Anmeldenummer: 07003456.6
(22) Anmeldetag: 19.02.2007
(51) Int. Cl.: F01M 13/02, F02M 25/06, F01M 13/04

(54) **Kurbelgehäuseentlüftung für eine Brennkraftmaschine**
Blowby gas circulation for a combustion engine
Circulation des gaz de carter pour un moteur à combustion

(43) Veröffentlichungstag der Anmeldung: 20.08.2008
(73) Patentinhaber: Bayerische Motoren Werke Aktiengesellschaft, 80809 München (DE)
(72) Erfinder: Götz, Karl-Heinz, 87463 Dietmannsried (DE); Lang, Heinz, 85253 Erdweg (DE); Singer-Bayrle, 82319 Starnberg (DE); Schiecke, Doris, 82327 Tutzing (DE)

(56) Entgegenhaltungen:
- EP-A- 1 528 244
- EP-A1- 1 447 533
- EP-A2- 1 469 171
- DE-A1-102006 002 131
- JP-A- 2001 303 923
- US-A1- 2003 024 512

## Beschreibung

Die Erfindung betrifft eine Kurbelgehäuseentlüftug für ein Brennkraftmaschine mit den Merkmalen aus dem Oberbegriff des Patentanspruchs 1.

Sie geht von der europäischen Offenlegungsschrift EP 1 447 533 A1 aus. Aus dieser ist eine Kurbelgehäuseentlüftung für eine Brennkraftmaschine mit einem Kurbelgehäuse und mit vier Zylindern, einem Zylinderkopf und einer Zylinderkopfhaube bekannt. Die Blow-By-Gase aus einem Raum zwischen der Zylinderkopfhaube und dem Zylinderkopf sind durch ein Leitungssystem mit einem Ölabscheider und einem Druckregelelement jedem Zylinder separat zuführbar. Das Leitungssystem, der Ölabscheider und das Druckregelelement sind hierbei weitgehend in die Zylinderkopfhaube und in den Zylinderkopf integriert.

In EP 1447533 wird eine Gasverteilerleiste vorgesehen, die sich weitgehend in Richtung der Brennkraftmaschinenlängsachse erstreckt. Durch diese Maßnahme wird in vorteilhafter Weise die Gesamtlänge des Leitungssystems minimiert. Erfindungsgemäß wird in Leitungssystem (8) für jeden Zylinder (4) ein Druckregelement vorgesehen.

Die Einleitung der blow-by-Gase nahe dem Gaswechseleinlassventil im Zylinderkopf unterstützt den o. g. Effekt.

Aufgrund der Ausgestaltung gemäß Patentanspruch 3 wird eine ideale Gleichverteilung des blow-by-Gases auf jeden Zylinder erzielt.

Gemäß Patentanspruch 4 kann eine Gasverteilerleiste vorgesehen werden, die sich gemäß Patentanspruch 5 vorzugsweise weitgehend in Richtung der Brennkraftmaschinenlängsachse erstreckt. Durch diese Maßnahme wird in vorteilhafter Weise die Gesamtlänge des Leitungssystems minimiert.

Im Folgenden ist die Erfindung anhand eines bevorzugten Ausführungsbeispieles in einer einzigen Figur näher erläutert.

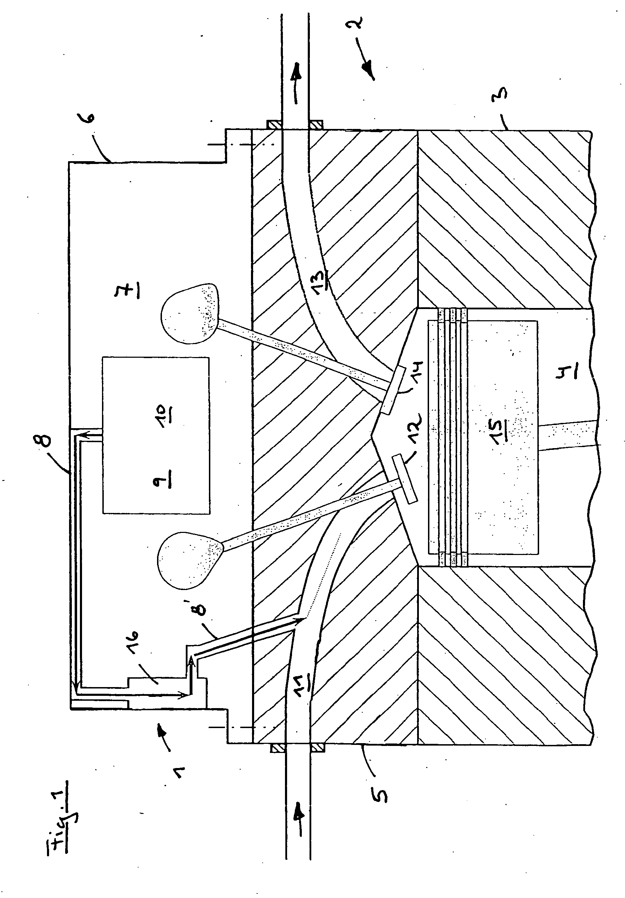

- Fig. 1: zeigt schematisch einen Schnitt durch eine Brennkraftmaschine quer zu einer Brennkraftmaschinenlängsachse.

Eine Brennkraftmaschine 2 weist geodätisch unten liegend ein Kurbelgehäuse 3 mit einem Zylinder 4 auf, in dem ein Kolben 15 geführt ist. Geodätisch über dem Kurbelgehäuse 3 ist ein Zylinderkopf 5 mit einem Saugkanal 11 angeordnet, wobei der Saugkanal 11 gegenüber dem Zylinder 4 von einem Gaswechseleinlassventil 12 verschließbar ist. Ferner weist der Zylinderkopf 5 einen Auslasskanal 13 auf, in dem ein Gaswechselauslassventil 14 angeordnet ist. Geodätisch über dem Zylinderkopf 5 ist eine Zylinderkopfhaube 6, in anderen Worten ein Zylinderkopfdeckel, vorgesehen, die einen nicht näher dargestellten Ventiltrieb abdeckt. In einem Raum 7 zwischen der Zylinderkopfhaube 6 und dem Zylinderkopf 5 sammeln sich beim Betrieb der Brennkraftmaschine bloy-by-Gase. Blow-by-Gase sind Gase, die beim Betrieb der Brennkraftmaschine 3 aufgrund des Verbrennungsdruckes zwischen Kolbenringen und dem Zylinder 4 in das Kurbelgehäuse 3 und von dort in den Raum 7 gedrückt werden. Damit im Raum 7 bzw. im Kurbelgehäuse kein Überdruck entsteht, werden die blow-by-Gase durch eine Kurbelgehäuseentlüftung 1 wieder der Verbrennung zugeführt. Auch gesetzlich ist ein Unterdruck gefordert.

Die Kurbelgehäuseentlüftung 1 besteht im Wesentlichen aus einem Ölabscheider 9, einem Druckregelelement 10, welches auch ein Druckbegrenzungselement sein kann, einem ersten Kanal 8, einer Gasverteilerleiste 16 sowie für jeden Zylinder 4 einem weiteren Kanal 8'. Erfindungsgemäß sind sämtliche Bauelemente der Kurbelgehäuseentlüftung 1 in der Zylinderkopfhaube 6 und in den Zylinderkopf 5 integriert. Die blow-by-Gase passieren auf dem Weg zur Verbrennung ausgehend vom Raum 7 zuerst den Ölabscheider 9 und anschließend das Druckregelelement 10, welches auch ein Druckbegrenzungselement sein kann. Ausgehend von dem Druckregel-, bzw. Druckbegrenzungselement 10 werden die blow-by-Gase durch den ersten Kanal 8 in die Gasverteilerleiste 16 geleitet, die sich weitgehend längs einer Brennkraftmaschinen-Längsachse erstreckt. Ab der Gasverteilerleiste 16 führt je Zylinder 4 ein weiterer Kanal 8' die blow-by-Gase in je einen Saugkanal 1. Jeder weitere Kanal 8' mündet relativ nahe dem Gaswechseleinlassventil 12 in den Saugkanal 11. Dies bedeutet, dass der weitere Kanal 8' im Zylinderkopf 5 in den Saugkanal 11 mündet.

In einer weiteren Ausführungsvariante ist in dem Kanal 8 für jeden Zylinder 4 ein eigenes Druckregelelement 10 vorgesehen. Auch können die Gasverteilerleiste 16 und/oder der Kanal 8, der Ölabscheider 9 und das Druckregelelement 10 teilweise oder vollständig im Zylinderkopf angeordnet sein. Die erfindungsgemäße Kurbelgehäuseentlüftung 1 kann in Brennkraftmaschinen mit Saugbetrieb, in aufgeladenen Brennkraftmaschinen sowie in Brennkraftmaschinen mit einer Kraftstoffeinspritzung direkt in den Zylinder 4 eingesetzt werden.

Bei Brennkraftmaschinen mit mehreren Zylinderköpfen, wie z. B. V6-, V8-, V12-, Stern- oder Boxerbrennkraftmaschinen, ist die erfindungsgemäße Ausgestaltung selbstverständlich in jedem Zylinderkopf 5, bzw. in jeder Zylinderkopfhaube 6 vorgesehen.

Durch die vorgeschlagene erfindungsgemäße Ausgestaltung wird einem Vereisen der Kurbelgehäuseentlüftung 1 bei niedrigen Temperaturen entgegengewirkt, da sich der Zylinderkopf 5 und der Raum 7 während einer Warmlaufphase der Brennkraftmaschine 2 sehr schnell erwärmen. Durch diese rasche Erwärmung wird vermieden, dass sich in dem blow-by-Gas enthaltener Wasserdampf als Eis in der Kurbelgehäuseentlüftung 1 ablagern und diese verstopfen kann.

### Bezugszeichenliste:

- 1.: Kurbelgehäuseentlüftung
- 2.: Brennkraftmaschine
- 3.: Kurbelgehäuse
- 4.: Zylinder
- 5.: Zylinderkopf
- 6.: Zylinderkopfhaube
- 7.: Raum
- 8.: erster Kanal
- 8': weiterer Kanal
- 9.: Ölabscheider
- 10.: Druckregelelement
- 11.: Saugkanal
- 12.: Gaswechseleinlassventil
- 13.: Auslasskanal
- 14.: Gaswechselauslassventil
- 15.: Kolben
- 16.: Gasverteilerleiste

## Patentansprüche

1. Kurbelgehäuseentlüftung (1) für eine Brennkraftmaschine (2) mit einem Kurbelgehäuse (3) mit zumindest zwei Zylindern (4), einem Zylinderkopf (5) und einer Zylinderkopfhaube (6), wobei Gase aus einem Raum (7) zwischen der Zylinderkopfhaube (6) und dem Zylinderkopf (5) durch ein Leitungssystem (8) mit zumindest einem Ölabscheider (9) und zumindest einem Druckregelelement (10) jedem Zylinder (4) separat zuführbar sind, wobei das Leitungssystem (8), der Ölabscheider (9) und das Druckregelelement (10) weitgehend in die Zylinderkopfhaube (6) und in den Zylinderkopf (5) integriert sind,
**dadurch gekennzeichnet, dass** im Leitungssystem (8) für jeden Zylinder (4) ein Druckregelelement (10) vorgesehen ist.

2. Kurbelgehäuseentlüftung nach Patentanspruch 1, wobei im Zylinderkopf (5) für jeden Zylinder (4) ein Saugkanal (11) mit zumindest einem Gaswechseleinlassventil (12) vorgesehen ist,
**dadurch gekennzeichnet, dass** das Leitungssystem (8) nahe dem Gaswechseleinlassventil (12) in den Saugkanal (11) mündet.

3. Brennkraftmaschine nach einem der Patentansprüche 1 oder 2,
**dadurch gekennzeichnet, dass** in der Zylinderkopfhaube (6) oder in dem Zylinderkopf (5) eine Gasverteilerleiste (16) vorgesehen ist.

4. Brennkraftmaschine nach Patentanspruch 3,
**dadurch gekennzeichnet, dass** sich die Gasverteilerieiste (16) weitgehend in Richtung einer Brennkraftmaschinenlängsachse erstreckt.

## Claims

1. A crankcase venting system (1) for an internal combustion engine (2) comprising a crankcase (3) with at least two cylinders (4), a cylinder head (5) and a cylinder-head cover (6), wherein gases from a space (7) between the cylinder-head cover (6) and the cylinder head (5) are conveyable separately to each cylinder through a pipe system (8) comprising at least one oil separator (9) and at least one pressure-regulating element (10), wherein the pipe system (8), the oil separator (9) and the pressure-regulating element (10) are substantially incorporated in the cylinder-head cover (6) and in the cylinder head (5), **characterised in that** a pressure-regulating element (10) is provided for each cylinder (4) in the pipe system (8).

2. A crankcase venting system according to claim 1, wherein an intake port (11) comprising at least one gas change inlet valve (12) is provided for each cylinder (4) in the cylinder head (5), **characterised in that** the pipe system (8) opens into the intake port (11) near the gas change inlet valve (12).

3. An engine according to claim 1 or 2, **characterised in that** a gas distribution strip (16) is provided in the cylinder-head cover (6) or in the cylinder head (5).

4. An engine according to claim 3, **characterised in that** the gas distribution strip (16) extends substantially along a longitudinal axis of the engine.

## Revendications

1. Système de ventilation du carter de vilebrequin (1) d'un moteur à combustion (2) comportant un carter de vilebrequin (3) équipé d'au moins deux cylindres (4), une culasse (5) et un chapeau de culasse (6), les gaz d'un volume (7) entre le chapeau de culasse (6) et la culasse (5) sont transférés par un système de conduites (8) équipé d'au moins un séparateur d'huile (9) et d'au moins un élément de régulation de pression (10), pour être fournis séparément à chaque cylindre (4),
le système de conduites (8), le séparateur d'huile (9) et l'élément de régulation de pression (10) étant pratiquement intégrés dans le chapeau de culasse (6) et dans la culasse (5),
**caractérisé en ce que**
le système de conduite (8) comporte un élément de régulation de pression (10), pour chaque cylindre (4).

2. Système de ventilation de carter de vilebrequin selon la revendication 1, dans lequel
la culasse (5) comporte un canal d'aspiration (11) avec au moins une soupape d'échange de gaz (12), pour chaque cylindre (4),
**caractérisé en ce que**
le système de conduites (8) débouche dans le canal d'aspiration (11) à proximité de la soupape d'échange de gaz (12).

3. Système de ventilation de carter de vilebrequin selon la revendication 1 ou 2,
**caractérisé par**
une barre de répartition de gaz (16) dans le chapeau de culasse (6) ou dans la culasse (5).

4. Système de ventilation de carter de vilebrequin selon la revendication 3,
**caractérisé en ce que**
la barre de répartition de gaz (16) s'étend pratiquement dans la direction de l'axe longitudinal du moteur à combustion.
